# EUROPEAN PATENT APPLICATION

(11) **EP 1 106 537 A1**
(43) Date of publication of application: **13.06.2001**
(21) Application number: 00204337.0
(22) Date of filing: 05.12.2000
(51) Int. Cl.: B65G 1/04, B66F 9/07

(54) **Cradle for an overhead crane**

(30) Priority: 11.12.1999 GB 9929219
(71) Applicant: Johnson, John Edward, Little Stretton, Leicestershire LE2 2FS (GB)
(72) Inventor: Johnson, John Edward, Little Stretton, Leicestershire LE2 2FS (GB)
(74) Representative: SERJEANTS

(57) **Abstract**

A cradle (20) for an overhead crane is used to extract items (10) from a set of storage positions (12). The storage positions (12) comprise a plurality of transversely extending cantilever arms (4) which are used to support the item (10). The cradle (20) has a base portion (22), a plurality of support blocks (26a-d) extending transversely across the base portion (22) and a pair of upright portions (24a,b) which connect the cradle to the crane.

The distance separating the two upright portions (24a,b) is such that it allows the two upright portions (24a,b) to pass either end of the item to be extracted (10) accommodated in vertical channels between adjacent stored items.

## Description

### Technical Field

The invention relates to a cradle for an overhead crane, and in particular to a cradle for extracting items stored on cantilever arms in a warehouse racking system.

### Background Art

Two types of warehouse racking system are well known. The first type uses cantilever arms to support the stored items. The second type uses cassettes to support the stored items, wherein the cassettes are simply stacked on top of each other.

Items stored in a cantilever arm type warehouse racking system can only be extracted by using a fork lift truck, or some other form of fork lift assembly. In particular, it is impossible to use an overhead crane to extract items stored on cantilever arms because the crane is fouled by any cantilever arms or racking lying above the item to be extracted. This is unfortunate because the use of a fork lift truck or fork lift assembly means that the aisles between the rows of warehouse racking must be made large enough to accommodate both the length of the forks and the length of the truck or other unit on which the forks are mounted. This severely reduces the amount of available storage space and the cost of purchasing and running fork lift trucks or installing a fork lift assembly is also very high.

Overhead cranes can be used to extract items stored in stacked cassettes. The installation of an overhead crane system is relatively cheap and the absence of any forks means that the aisles between the warehouse racking can be made quite narrow. However, the problem with stacked cassettes is that to extract an item from the bottom cassette, all the cassettes stacked on top of the bottom cassette must first be removed. This is clearly time consuming and also requires additional "parking" space for the temporarily removed cassettes, thereby reducing the amount of available storage space.

The purpose of the present invention is therefore to provide a cradle which can be used with an overhead crane system but which is capable of extracting an item stored in a cantilever arm type warehouse racking system.

### The Invention

A first aspect of the present invention provides a cradle for an overhead crane for carrying an item, the cradle comprising:
a base portion;
a plurality of supporting blocks extending transversely across the base portion, for supporting the item above the base portion, the supporting blocks being spaced longitudinally along the base portion; and
a pair of upright portions for connecting the cradle to the overhead crane.

To ensure that the item is carried on the cradle safely, the supporting blocks typically include a shaped profile at their upper surface. The shaped profile is usually matched to the cross-section of the item and may, for example, be a V-shaped profile when the cross-section of the item is circular, or alternatively a U-shaped profile when the cross-section of the item is rectangular.

The cradle is connected to the overhead crane by means of cables which are attached to the two upright portions.

A second aspect of the present invention provides a warehouse racking system for storing items, the warehouse racking system comprising:
a plurality of transversely extending cantilever arms on which the items are supported; and
a cradle for an overhead crane, for extracting one of the stored items, the cradle comprising:
   a base portion;
   a plurality of supporting blocks extending transversely across the base portion, for supporting the item above the base portion, the supporting blocks being spaced in the longitudinal direction such that the cantilever arms may pass between them; and
   a pair of upright portions for connecting the cradle to the overhead crane.

The upright portions are spaced in the longitudinal direction such that the cantilever arms may pass between them without the upright portions being fouled. The upright portions are also spaced in the longitudinal direction by a distance which is greater than the maximum longitudinal length of the stored items.

The items are supported on the cantilever arms and are arranged such that they are stored in a plurality of longitudinal rows and vertical columns. If there are a number of adjacent vertical columns then to avoid fouling the upright portions, vertical spacer channels are typically provided at the ends of each vertical column of stored items. The upright portions are then spaced in the longitudinal direction by a distance such that each upright portion can lie within a vertical spacer channel.

To enable the supporting blocks to support the item, the minimum height of the supporting blocks above the base portion is greater than the maximum thickness of the cantilever arms. The cantilever arms are commonly carried on vertical support pillars.

If the spacing between the cantilever arms is altered then the spacing of the upright portions of the cradle in the longitudinal direction must be altered accordingly so that the cantilever arms may pass freely between the two upright portions. This will ensure that the upright portions are not fouled by the cantilever arms when extracting a stored item.

A third aspect of the present invention provides a method of extracting an item supported on a plurality of transversely extending cantilever arms, the method comprising the steps of:
(a) providing a cradle for an overhead crane, the cradle comprising:
   a base portion;
   a plurality of supporting blocks extending transversely across the base portion, for supporting the item above the base portion, the supporting blocks being spaced in the longitudinal direction such that the cantilever arms may pass between them; and
   a pair of upright portions for connecting the cradle to the overhead crane, the upright portions being spaced in the longitudinal direction such that the upright portions may pass either end of the item to be extracted;
(b) positioning the cradle such that the top of the supporting blocks abuts the bottom of the item to be extracted, wherein the cantilever arms are positioned between the supporting blocks and the upright portions are positioned at either end of the item to be extracted;
(c) raising the cradle until the item is supported on the supporting blocks and is no longer supported on the cantilever arms; and
(d) moving the cradle transversely away from the cantilever arms on which the item was supported until the supporting blocks are no longer positioned between the cantilever arms.

### Drawings

Figure 1 is a plan view showing a warehouse racking system having cantilever arms;
Figure 2 is a perspective view of a cradle according to a first aspect of the present invention;
Figure 3 is a side view of the cradle of Figure 2; and
Figure 4 is a perspective view of a warehouse racking system (complete with cradle and overhead crane) according to a second aspect of the present invention.

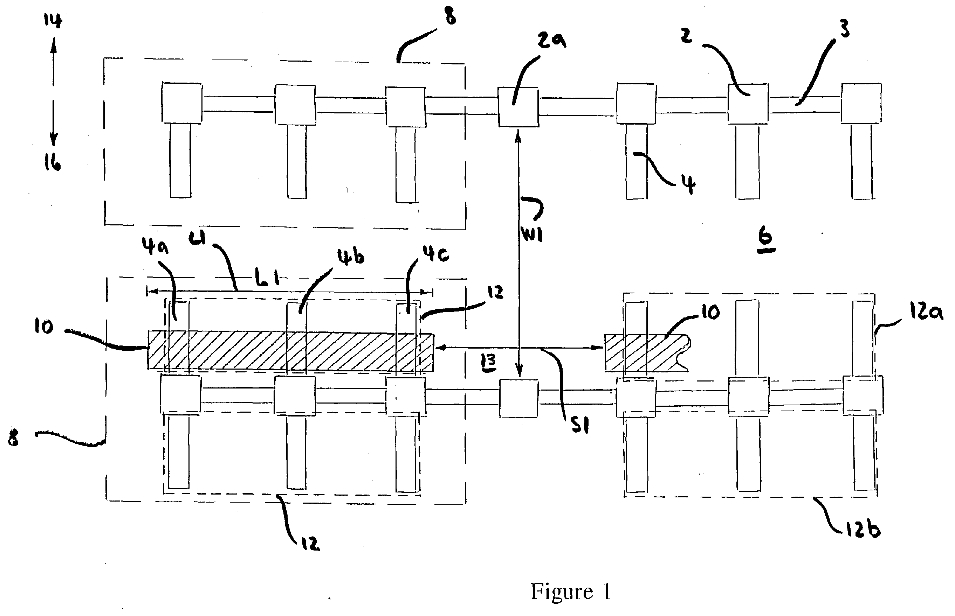

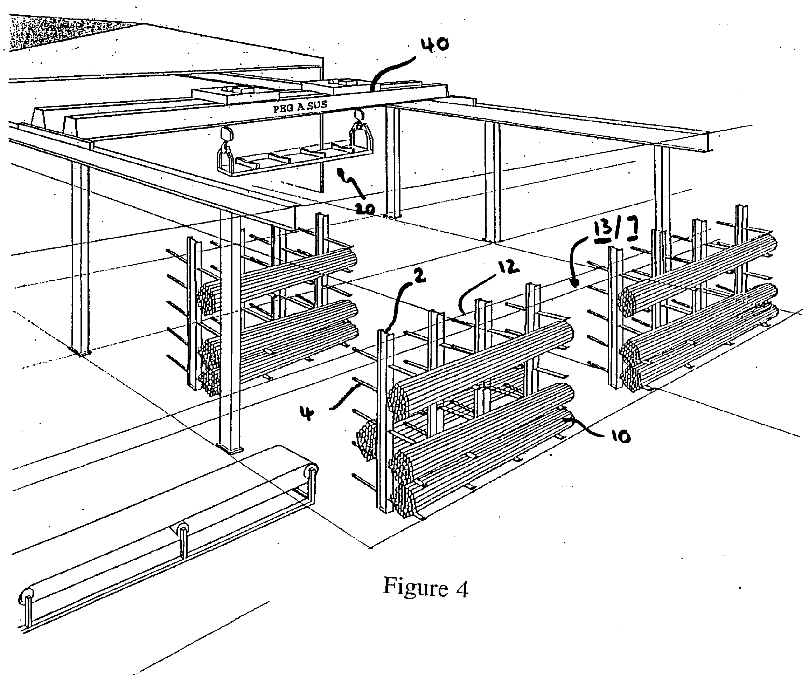

Referring first to Figures 1 and 4, a warehouse racking system has several longitudinal rows of support pillars 2 each connected by a series of cross-braces 3 for strength and rigidity. Cantilever arms 4 are carried by some of the support pillars 2 and extend in a transverse direction substantially at right angles to the support pillars 2. Although in Figures 1 and 4 the cantilever arms 4 are shown to be carried on support pillars 2 they can, in fact, be carried on any type of vertical support, for example a wall.

The longitudinal rows of support pillars 2 are spaced from each other by an aisle 6 having a width W1. In addition, each longitudinal row of support pillars 2 is further divided into a number of individual racking sections 8.

In Figure 1 the racking sections 8 are shown as being separated by a support pillars 2a which do not carry any cantilever arms 4. In Figure 4 the distinction between racking sections is even more pronounced with an extra transverse aisle 7 being provided between each racking section. However, it should be readily appreciated that all the support pillars 2 of Figure 1 may carry cantilever arms in which case the racking section 8 would in effect be the entire longitudinal row.

As shown in Figure 1, each individual racking section 8 includes at least three cantilever arms 4a-c. Each of the cantilever arms 4a-c is positioned at the same height in the vertical direction and together they form a storage position 12 for storing a single item 10, for example a bungle of steel tubing.

Each racking section 8 may have more than one storage position 12 arranged in the longitudinal direction. Typically, each racking section 8 will have several of such storage positions 12 arranged in the vertical direction such that items can be stored in both longitudinal rows and vertical columns. The height of each of the vertical storage positions may vary from racking section to racking section, provided the level of each particular storage position is known. In addition, each racking section 8 will normally have cantilever arms extending out in both transverse directions 14, 16 and can therefore provide back-to-back storage positions 12a,b as shown.

Although each of the storage positions 12 shown in Figure 1 has three cantilever arms 4a-c, it should be readily appreciated that the number of cantilever arms 4 is not limited to just three and that each storage position 12 can have any number of cantilever arms 4.

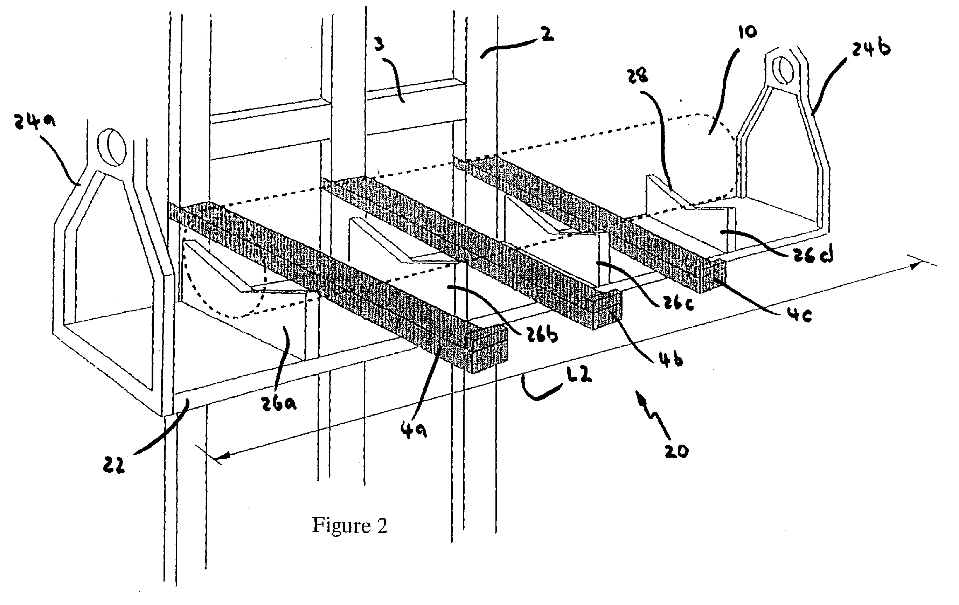

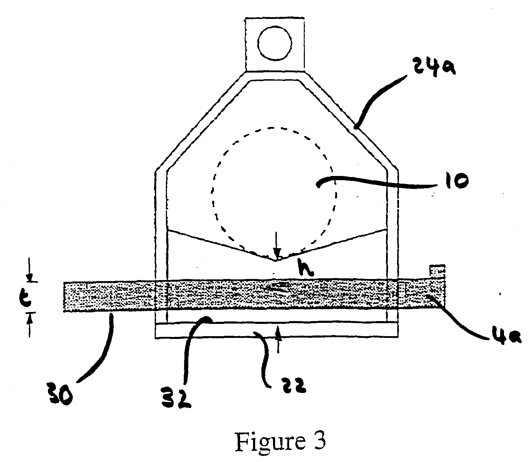

A cradle according to the present invention will now be described with reference to Figures 2 and 3. The cradle 20 has a rectangular base portion 22 and is provided at its two extreme ends with a pair of upright portions 24a,b. The base portion 22 also includes four supporting blocks 26a-d which extend transversely across the base portion 22 and which each have a V-shaped transverse profile 28 at their upper surfaces. The support blocks 26a-d are spaced apart in the longitudinal direction. The pair of upright portions 24a,b are used to connect the cradle 20 to a pair of cables of the overhead crane system 40 (Figure 4) which is of a standard type.

The distance separating the two upright portions 24a,b (which is the length L2 of the base portion 22 as shown in Figure 2) is greater than the maximum length L1 of item to be extracted 10 When items of maximum length L1 are stored on adjacent storage positions 12, there remains a vertical channel 13 of width S1 between the ends of the items, which accommodates the upright portions 24a,b of the cradle and the cables connecting them to the overhead crane 40. Therefore, the distance separating the two upright portions 24a,b is also less than the length L1 of the item to be extracted 10 plus the width S1 of the vertical channel 13 (i.e. L1 < L2 < L1 + S1).

In operation, the cradle 20 is lowered into the aisle 6 between two storage positions 12 until the top of the support blocks 26a-d lies below the bottom of the item to be extracted 10. The cradle 20 is then moved transversely toward the item such that the three cantilever arms 4a-c pass between the first and second, the second and third, and the third and fourth support blocks respectively. Because the separation of the upright portions 24a,b (i.e. the length L2 of the base portion 22) is greater than the length L1 of the item to be extracted 10 the upright portions 24a,b pass freely on either side of the item. Similarly, because the separation of the upright portions 24a,b is less than the length L1 of the item to be extracted 10 plus the width S1 of the vertical channels 13, then the upright portions 24a,b are not fouled by the adjacent stored items.

Once the cradle 20 is positioned such that the support blocks 26a-d are directly below the item to be extracted 10, the cradle 20 is slowly lifted until the item 10 is supported by the cradle 20 via the support blocks 26a-d, and not by the cantilever arms 4a-c. With reference to Figure 3, the height h of the support blocks 26a-d is greater than the thickness t of the cantilever arms 4a-c such that the item to be extracted 10 is lifted off the cantilever arms 4a-c without the bottom surface 30 of the cantilever arms 4a-c contacting the top surface 32 of the base portion 22. Once the item to be extracted 10 is fully supported by the cradle 20, the cradle 20 is then moved transversely back into the aisle 6, lifted above the support columns 2 and driven by the overhead crane system to transport the extracted item to where it is required.

The same operation, only in reverse, may be used to place an item into a storage position.

The V-shaped profile 28 provided in the support blocks 26a-d is specifically designed for use with the cylindrical storage item 10 as shown. However, it should be readily appreciated that the support blocks 26a-d may be provided with any other profile depending on the shape of the item to be extracted. Similarly, it should also be appreciated that the number of supporting blocks 26a-d and the longitudinal distance between them can be altered such that the item to be extracted is securely held during transportation. In particular, the longitudinal distance between the supporting blocks 26a-d should be less than the length L1 of the item to be extracted such that the item will be supported by two of the supporting blocks at all times. However, the spacing of the supporting blocks 26a-d must always be such that the cantilever arms 4 can pass freely between them.

## Claims

1. A cradle (20) for an overhead crane for carrying an item (10), the cradle comprising:
a base portion (22);
a plurality of supporting blocks (26a-d) extending transversely across the base portion (22), for supporting the item above the base portion (22), the supporting blocks (26a-d) being spaced longitudinally along the base portion (22); and
a pair of upright portions (24a,b) for connecting the cradle (20) to the overhead crane.

2. A cradle (20) according to claim 1, wherein the supporting blocks (26a-d) include a shaped profile (28) at their upper surface.

3. A cradle (20) according to claim 2, wherein the shaped profile is a V-shaped profile (28) when the cross-section of the item (10) to be supported is circular.

4. A cradle (20) according to claim 2, wherein the shaped profile is a U-shaped profile when the cross-section of the item (10) to be supported is rectangular.

5. A cradle (20) according to any preceding claim, wherein the two upright portions (24a,b) are connected to the overhead crane by means of a pair of cables.

6. A warehouse racking system for storing items (10), the warehouse racking system comprising:
a plurality of transversely extending cantilever arms (4) on which the items (10) are supported; and
a cradle (20) for an overhead crane, for extracting one of the stored items (10), the cradle comprising:
a base portion (22);
a plurality of supporting blocks (26a-d) extending transversely across the base portion (22), for supporting the item (10) above the base portion (22), the supporting blocks (26a-d) being spaced in the longitudinal direction such that the cantilever arms (4) may pass between them; and
a pair of upright portions (24a,b) for connecting the cradle (20) to the overhead crane.

7. A warehouse racking system according to claim 8, wherein the upright portions (24a,b) are spaced in the longitudinal direction such that the cantilever arms (4) may pass between them.

8. A warehouse racking system according to claim 8 or claim 9, wherein the upright portions (24a,b) are spaced in the longitudinal direction by a distance (L2) which is greater than the maximum longitudinal length (L1) of the stored items (10).

9. A warehouse racking system according to any of claims 8 to 10, wherein the items (10) are stored in a plurality of longitudinal rows and vertical columns.

10. A warehouse racking system according to claim 11, comprising a vertical spacer channel (13) at both ends of each vertical column of stored items (10), wherein the upright portions (24a,b) are spaced in the longitudinal direction by a distance such that each of the upright portions (24a,b) can lie within a vertical spacer channel (13).

11. A cradle according to any of claims 8 to 12, wherein the minimum height (h) of the supporting blocks (26a-d) above the base portion is greater than the maximum thickness (t) of the cantilever arms (4).

12. A cradle according to any of claims 8 to 13, wherein the cantilever arms (4) are carried on vertical support pillars (2).

13. A method of extracting an item (10) supported on a plurality of transversely extending cantilever arms (4), the method comprising the steps of:
(a) providing a cradle (20) for an overhead crane, the cradle comprising:
a base portion (22);
a plurality of supporting blocks (26a-d) extending transversely across the base portion (22), for supporting the item above the base portion (22), the supporting blocks (26a-d) being spaced in the longitudinal direction such that the cantilever arms (4) may pass between them; and
a pair of upright portions (24a,b) for connecting the cradle (20) to the overhead crane, the upright portions (24a,b) being spaced in the longitudinal direction such that the upright portions (24a,b) may pass either end of the item (10) to be extracted;
(b) positioning the cradle (20) such that the top of the supporting blocks (26a-d) abuts the bottom of the item (10) to be extracted, wherein the cantilever arms (4) are positioned between the supporting blocks (26a-d) and the upright portions (24a,b) are positioned at either end of the item (10) to be extracted;
(c) raising the cradle (20) until the item (10) is supported on the supporting blocks (26a-d) and is no longer supported on the cantilever arms (4); and
(d) moving the cradle (20) transversely away from the cantilever arms (4) on which the item (10) was supported until the supporting blocks (26a-d) are no longer positioned between the cantilever arms (4).
